# EUROPÄISCHE PATENTSCHRIFT

(11) **EP 3 831 570 B1**
(45) Veröffentlichungstag und Bekanntmachung des Hinweises auf die Patenterteilung: **12.07.2023**
(21) Anmeldenummer: 20211025.0
(22) Anmeldetag: 01.12.2020
(51) Int. Cl.: B29C 48/12, B29C 48/87, B29L 31/00, B29C 48/11, B29C 48/30

(54) **VERFAHREN ZUR HERSTELLUNG EINES KUNSTSTOFF-PROFILS**
METHOD FOR PRODUCING A PLASTIC PROFILE
PROCÉDÉ DE FABRICATION D'UN PROFILÉ EN MATIÈRE SYNTHÉTIQUE

(30) Priorität: 06.12.2019 DE 102019133360
(43) Veröffentlichungstag der Anmeldung: 09.06.2021
(73) Patentinhaber: REHAU Industries SE & Co. KG, 95111 Rehau (DE)
(72) Erfinder: Frohmader, Martin, 95030 Hof (DE); Janssen, Wolfgang, 26789 Leer (DE); Krüger, Carsten, 26441 Jever (DE); Rinck, Kay-Jochen, 95032 Hof (DE); Sander, Ralf, 95494 Gesees (DE); Stenitschka, Michael, 26419 Schortens (DE)

(56) Entgegenhaltungen:
- WO-A1-2012/143373
- DE-A1- 3 937 273
- DE-B4-102008 047 210
- DE-U1-202007 014 876

## Beschreibung

Die Erfindung betrifft ein Verfahren zur Herstellung eines Kunststoff-Profils mit den Merkmalen des Oberbegriffs des Patentanspruchs 1.

Ein derartiges Verfahren ist aus der WO 2012 / 143373 A1 bekannt. Die genannte Druckschrift beschäftigt sich mit der Extrusion von Fensterrahmenprofilen. Derartige Profile weisen regelmäßig sogenannte Mauerhaken auf, welche zur Verankerung des Fensterrahmens im Mauerwerk dienen. Aus Stabilitätsgründen muss sichergestellt sein, dass diese Mauerhaken eine vorgegebene Wandstärke nicht unterschreiten. Um dies zu gewährleisten, ist es bei einer Standardextrusion erforderlich, dass Profil insgesamt mit einer ausreichend großen Wandstärke herzustellen, um die geforderte Dimensionierung der Mauerhaken sicherzustellen. Dies führt regelmäßig dazu, dass das gesamte Profil vergleichsweise "dick" hergestellt werden muss und dadurch mehr Kunststoffmaterial verbraucht wird, als es eigentlich notwendig wäre. Zur Lösung dieses Problems schlägt die genannte Druckschrift vor, lokal - im konkret genannten Fall beispielsweise im Bereich der Mauerhaken - eine gezielte Temperierung des Werkzeugs vorzunehmen, um durch ein entsprechendes Heizen bzw. Kühlen lediglich die Wandstärke der Mauerhaken zu beeinflussen, wohingegen die Profilstärke des restlichen Fensterrahmenprofils hiervon praktisch unbeeinflusst bleibt. Durch eine Beheizung der entsprechenden Sektion im Werkzeug wird die Viskosität der Kunststoffschmelze lediglich lokal reduziert und dadurch der Schmelzefluss dort erhöht, was sich in einer lediglich lokal erhöhten Wandstärke niederschlägt. Bei einer Kühlung hingegen reduziert sich die Wandstärke lokal entsprechend. Durch die so erzielbare gezielte Beeinflussung der Wandstärke des Profils lediglich im Bereich der Mauerhaken soll insgesamt eine nicht unerhebliche Materialeinsparung realisiert werden. Gleiches gilt entsprechend für andere Bereiche der Extrusionsprofile, die stegförmig ausgebildet sind. Nachteilig bei dem vorgenannten Verfahren ist jedoch, dass dieses den konkreten geometrischen Anforderungen hinsichtlich der Mauerhaken bzw. anderer stegförmiger Bereiche des Profilquerschnitts im Einzelfall nicht genügend Rechnung trägt und somit der Effekt der Materialeinsparung begrenzt ist.

Die DE 20 2007 014876 U1 offenbart ein Verfahren zur Herstellung von Kunststoff-Profilen im Extrusionsverfahren, wobei das Extrusionswerkzeug eine Temperiereinrichtung mit mehreren Temperiersektionen aufweist. Die DE 10 2008 047210 B4 zeigt eine Extrusionslinie zur Herstellung von Kunststoffrohren, bei der die formgebende Düse des Extrusionswerkzeugs umfangsseitig in einzelne Segmente aufgeteilt ist, die jeweils über eine Heiz- und Kühleinrichtung verfügen. Die DE 39 37 273 A1 offenbart ein Extrusionsverfahren zur Herstellung von Rohren und Profilen, bei dem die Schmelze im Extrudierspalt temperaturgeregelt wird.

Der Erfindung liegt die Aufgabe zugrunde, ein Verfahren mit den eingangs beschriebenen Merkmalen anzugeben, welches eine verbesserte lokale Temperierung ermöglicht.

Erfindungsgemäß wird diese Aufgabe durch die Merkmale des Patentanspruchs 1 gelöst. Die Krümmung erstreckt sich zweckmäßigerweise über einen Winkel von mindestens 30°, vorzugsweise mindestens 45°, z.B. mindestens 90°. Mithilfe der erfindungsgemäßen Lehre ist es möglich, innerhalb einer Temperiersektion eine wesentlich genauer an die jeweiligen Anforderungen angepasste und damit exaktere Steuerung bzw. Regelung der entsprechenden Wandstärke des einzelnen stegförmigen Vorsprungs vorzunehmen. Hierdurch lässt sich das Potenzial der Materialeinsparung bei der Herstellung des Extrusionprofils sehr gut ausschöpfen. Bei dem Heiz-bzw. Kühlmedium kann es sich um eine Flüssigkeit, beispielsweise Wasser oder Öl, oder aber auch um ein Gas, beispielsweise Luft, handeln.

Zweckmäßigerweise weist der Kanal im Profilquerschnitt gesehen eine Erstreckung von mindestens 22 mm auf. Erfindungsgemäß ist der Kanal kann in einen in das Extrusionswerkzeug einschiebbaren Einsatz der Temperiersektion integriert, der die Wärme des Heizmediums bzw. die Kälte des Kühlmediums an die Innenwandung des Extrusionswerkzeugs herantransportiert. Der Einsatz besteht zweckmäßigerweise aus einem Material mit hoher Wärmeleitfähigkeit λ > 100 W/mK, z.B. einem Metall, insbesondere Kupfer, einer Kupferlegierung oder Aluminium.

Vorzugsweise beträgt die Erstreckung des Kanals in Extrusionsrichtung gesehen weniger als 20 mm, vorzugsweise weniger als 18 mm. Diese kurze axiale Erstreckung gewährleistet eine gleichmäßige Temperierung in Extrusionsrichtung, vereinfacht den konstruktiven Aufwand und ist hinsichtlich der Beeinflussung der Dimensionierung des entsprechenden Abschnittes des Extrusionsprofils ausreichend.

Im Rahmen der Erfindung liegt es ferner, dass der Kanal im Profilquerschnitt gesehen schräg zum steqförmigen Vorsprung ausgerichtet ist. Vorzugsweise schließen hierbei der Kanal und der stegförmige Vorsprung miteinander einen Winkel von 5° - 30°, vorzugsweise von 8° - 15°, ein. Hierdurch ist eine differenzierte Kühlung bzw. Beheizung möglich, die an die konkreten Anforderungen hinsichtlich der Wandstärke des stegförmigen Vorsprungs anpassbar ist.

Im Folgenden wird die Erfindung anhand einer lediglich ein Ausführungsbeispiel darstellenden Zeichnung ausführlich erläutert. Es zeigen schematisch:
- Fig. 1: eine Kombination aus Fensterflügel und Fensterrahmen im Querschnitt gesehen
- Fig.2a: die Darstellung eines erfindungsgemäßen Verfahrens anhand einer Querschnitts-darstellung des entsprechenden Extrusionswerkzeugs,
- Fig.2b: das Ausführungsbeispiel gemäß Fig. 2a in einer dreidimensionalen Darstellung und
- Fig. 3: eine weitere Ausführungsform der Erfindung in einer der Fig. 2 entsprechenden Darstellung.

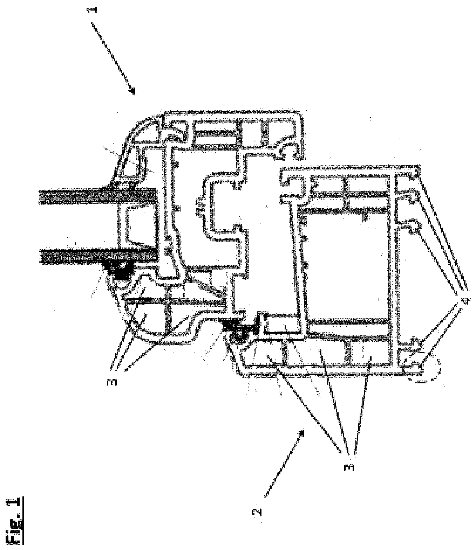

Die Figur 1 zeigt im Querschnitt gesehen eine Kombination aus einem Fensterflügel 1 und einem Fensterrahmen 2, wobei sowohl Fensterflügel 1 als auch Fensterrahmen 2 jeweils mittels eines Kunststoff-Extrusionsverfahrens hergestellt wurden. Es ist erkennbar, dass sowohl das Fensterflügel-Profil 1 als auch das Fensterrahmen-Profil 2 jeweils eine vergleichsweise komplexe Geometrie aufweisen über eine Vielzahl von Hohlkammern 3 verfügen. Beim Fensterrahmen 2 ist ferner erkennbar, dass dieser an seinem unteren Ende über insgesamt fünf sogenannte Mauerhaken 4 verfügt, welche zur mechanischen Befestigung des Fensterrahmens 2 im (nicht dargestellten) Mauerwerk eines Gebäudes dienen. Diese Mauerhaken 4 müssen aus Festigkeitsgründen eine bestimmte Mindeststärke aufweisen.

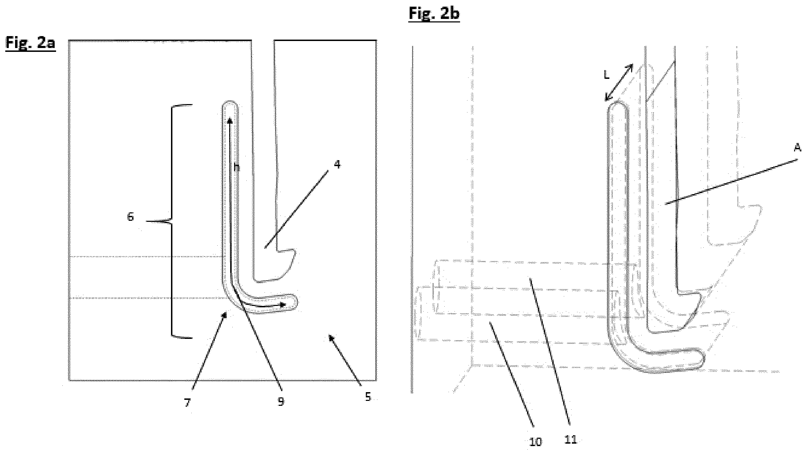

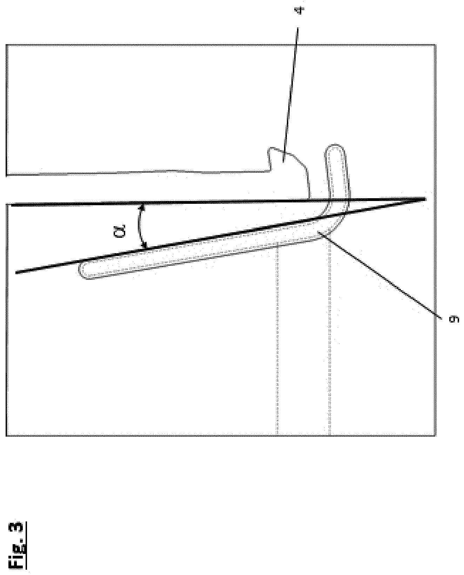

Um während des Extrusionsverfahrens die Geometrie der Mauerhaken 4, insbesondere deren Wandstärke genau zu steuern bzw. zu regeln, wird das in den Figuren 2a und 2b bzw. in Fig. 3 dargestellte erfindungsgemäße Herstellungsverfahren eingesetzt. Die Fig. 2a zeigt ausschnittsweise ein Extrusionswerkzeug 5, mit dem das in Fig. 1 dargestellte Fensterrahmenprofil 2 hergestellt wird. Zu erkennen ist in Fig. 2 das Extrusionswerkzeug 5 im Bereich des Mauerhakens 4 in Fig. 1 links unten, der dort durch einen gestrichelten Kreis hervorgehoben ist. Beim Extrusionsverfahren wird zur Profilformgebung Kunststoffschmelze durch das Extrusionswerkzeug 5 geführt. Im Extrusionswerkzeug 5 ist für alle fünf Mauerhaken 4 - also für jeden entsprechenden einzelnen stegförmigen Vorsprung - jeweils eine Temperiersektion 6 vorgesehen, von denen in Fig. 2 entsprechend diejenige für den in Fig. 1 hervorgehobenen Mauerhaken 4 links unten dargestellt ist. Während des Extrusionsverfahrens erfolgt in jeder Temperiersektion 6 des Extrusionswerkzeugs 5 eine gezielt lokale Beeinflussung der Wandstärke eines einzelnen stegförmigen Vorsprungs des Kunststoff-Extrusionsprofils 2 - hier also der einzelnen Mauerhaken 4 - durch Temperierung, wobei gattungsgemäß zur lokalen Beeinflussung der Wandstärke pro Temperiersektion 6 mindestens eine Temperiervorrichtung 7 im Extrusionswerkzeug 5 vorgesehen ist, mittels derer die Innenwandung des Extrusionswerkzeugs 5 in der Temperiersektion 6 gezielt beheizt und/oder gekühlt werden kann. Erfindungsgemäß ist nun die Temperiervorrichtung 7 als von einem Heiz- bzw. Kühlmedium durchströmbarer Kanal 9 ausgebildet, der im Profilquerschnitt gesehen eine Krümmung aufweist und hierdurch an die Endkontur der stegförmigen Vorsprünge, also der Mauerhaken 4 angepasst ist. Im Ausführungsbeispiel beträgt die Krümmung mehr als 90°. Der Kanal 9 weist im Profilquerschnitt gesehen eine (im unteren Endbereich entlang der Krümmung verlaufende) Erstreckung von mindestens h = 22 mm auf. Dies bedeutet im Ausführungsbeispiel, dass auch die in Fig. 2b dargestellte, vom Kanal 9 überdeckte Abwicklung A des Endbereichs des stegförmigen Vorsprungs 4 eine Erstreckung von mindestens 22 mm besitzt. Die Erstreckung des Kanals 9 in Extrusionsrichtung gesehen (also aus der Zeichenebene in Fig. 2 herauszeigend) beträgt hingegen im Ausführungsbeispiel weniger als L = 18 mm (s. Fig. 2b).

Anhand der Fig. 2b ist erkennbar, dass der Kanal 9 jeweils mit einem Zulauf 10 und einem Ablauf 11 versehen ist, durch den das fluide Heizmedium bzw. das fluide Kühlmedium zum Kanal 9 transportiert bzw. von diesem weg transportiert wird.

Beim Ausführungsbeispiel gemäß Fig. 3 ist der Kanal 9 im Profilquerschnitt gesehen schräg zum steqförmigen Vorsprung 4 ausgerichtet, wobei der Kanal 9 und der stegförmige Vorsprung 4 miteinander einen Winkel α von 8° - 15° einschließen.

## Patentansprüche

1. Verfahren zur Herstellung eines Kunststoff-Profils (2) mit mindestens einem stegförmigen Vorsprung (4), insbesondere eines Fenster- oder Tür-Hohlkammerprofiles (1), mittels eines Extrusionsverfahrens,
- wobei im Rahmen des Extrusionsverfahrens zur Profilformgebung Kunststoffschmelze durch ein Extrusionswerkzeug (5) geführt wird,
- wobei während des Extrusionsverfahrens in mindestens einer Temperiersektion (6) des Extrusionswerkzeugs (5) eine gezielt lokale Beeinflussung der Wandstärke des Kunststoff-Extrusionsprofils (2) durch Temperierung erfolgt,
- wobei die Temperiersektion (6) einem einzelnen stegförmigen Vorsprung (4) des Kunststoff-Extrusionsprofils (2) zugeordent ist,
- wobei zur lokalen Beeinflussung der Wandstärke pro Temperiersektion (6) mindestens eine Temperiervorrichtung (7) im Extrusionswerkzeug (5) vorgesehen ist, mittels derer die Innenwandung des Extrusionswerkzeugs (5) in der Temperiersektion (6) gezielt beheizt und/oder gekühlt werden kann, und
- wobei die Temperiervorrichtung (7) als von einem Heiz- bzw. Kühlmedium durchströmbarer Kanal (9) ausgebildet ist, der im Profilquerschnitt gesehen eine Krümmung aufweist und hierdurch an die Endkontur des stegförmigen Vorsprungs (4) angepasst ist.
**dadurch gekennzeichnet, dass** der Kanal (9) in einen in das Extrusionswerkzeug (5) einschiebbaren Einsatz (12) der Temperiersektion (6) integriert ist, der die Wärme des Heizmediums bzw. die Kälte des Kühlmediums an die Innenwandung des Extrusionswerkzeugs (5) herantransportiert.

2. Verfahren nach Anspruch 1, **dadurch gekennzeichnet, dass** der Kanal (9) im Profilquerschnitt gesehen eine Erstreckung von mindestens h = 22 mm aufweist.

3. Verfahren nach Anspruch 1 oder 2, **dadurch gekennzeichnet, dass** die Erstreckung des Kanals (9) in Extrusionsrichtung gesehen weniger als L = 20 mm, vorzugsweise weniger als L = 18 mm, beträgt.

4. Verfahren nach einem der Ansprüche 1 bis 3, **dadurch gekennzeichnet, dass** der Kanal (9) im Profilquerschnitt gesehen schräg zum stegförmigen Vorsprung (4) ausgerichtet ist.

5. Verfahren nach Anspruch 4, **dadurch gekennzeichnet, dass** der Kanal (9) und der stegförmige Vorsprung (4) miteinander einen Winkel von 5° - 30°, vorzugsweise von 8° - 15°, einschließen.

## Claims

1. Method for producing a plastics profile (2), comprising at least one rib-like projection (4), in particular of a window or door hollow section (1), by means of an extrusion method,
- wherein in the context of the extrusion method, for profile shaping plastics melt is guided through an extrusion die (5),
- wherein, during the extrusion method, in at least one temperature-control section (6) of the extrusion die (5) the wall thickness of the plastics extrusion profile (2) is influenced locally, in a targeted manner, by means of temperature control,
- wherein the temperature-control section (6) is associated with a single rig-like projection (4) of the plastics extrusion profile (2),
- wherein, for locally influencing the wall thickness at least one temperature-control device (7) is provided, in the extrusion die (5), per temperature-control section (6), by means of which temperature-control device the inner wall of the extrusion die (5) can be purposely heated and/or cooled, in the temperature-control section (6), and
- wherein the temperature-control device (7) is designed as a channel (9) through which a heating or cooling medium can flow, which channel, when viewed in profile cross section, has a curvature, and is thereby adjusted to the end contour of the rib-like projection (4),
**characterised in that** the channel (9) is integrated into an insert (12) of the temperature-control section (6) which can be pushed into the extrusion tool (5), which transports the heat of the heating medium or the cold of the cooling medium towards the inner wall of the extrusion die (5).

2. Method according to claim 1, **characterised in that** the channel (9), viewed in profile cross section, has an extension of at least h = 22 mm.

3. Method according to either claim 1 or claim 2, **characterised in that** the extension of the channel (9), viewed in the extrusion direction, is less than L = 20 mm, preferably less than L = 18 mm.

4. Method according to any of claims 1 to 3, **characterised in that** the channel (9), viewed in profile cross section, is oriented obliquely with respect to the rib-like projection (4).

5. Method according to claim 4, **characterised in that** the channel (9) and the rib-like projection (4) together enclose an angle of 5° - 30°, preferably of 8° - 15°.

## Revendications

1. Procédé de fabrication d'un profilé en matière plastique (2) avec au moins une partie faisant saillie en forme d'entretoise (4), en particulier d'un profilé de chambre creuse de fenêtre ou de porte (1), au moyen d'un procédé d'extrusion,
- dans lequel de la matière fondue de matière plastique est guidée par un outil d'extrusion (5) pour le façonnage de profilé dans le cadre du procédé d'extrusion,
- dans lequel une influence locale ciblée de l'épaisseur de paroi du profilé d'extrusion en matière plastique (2) est effectuée par thermorégulation pendant le procédé d'extrusion dans au moins une section de thermorégulation (6) de l'outil d'extrusion (5),
- dans lequel la section de thermorégulation (6) est associée à une partie faisant saillie (4) individuelle en forme d'entretoise du profilé d'extrusion en matière plastique (2),
- dans lequel au moins un dispositif de thermorégulation (7) est prévu dans l'outil d'extrusion (5) pour influencer localement l'épaisseur de paroi par section de thermorégulation (6), au moyen duquel la paroi intérieure de l'outil d'extrusion (5) peut être chauffée et/ou refroidie de manière ciblée dans la section de thermorégulation (6), et
- dans lequel le dispositif de thermorégulation (7) est réalisé en tant qu'un canal (9) pouvant être traversé par un milieu de chauffage ou de refroidissement, qui présente, vu dans la section transversale de profilé, une incurvation et est adapté de ce fait au contour final de la partie faisant saillie en forme d'entretoise (4),
**caractérisé en ce que** le canal (9) est intégré dans un insert (12), pouvant être enfilé dans l'outil d'extrusion (5), de la section de thermorégulation (6), qui transporte la chaleur du milieu de chauffage ou le froid du milieu de refroidissement à la paroi intérieure de l'outil d'extrusion (5).

2. Procédé selon la revendication 1, **caractérisé en ce que** le canal (9) présente, vu dans la section transversale de profilé, une extension d'au moins h = 22 mm.

3. Procédé selon la revendication 1 ou 2, **caractérisé en ce que** l'extension du canal (9) est, vu dans la direction d'extrusion, inférieure à L = 20 mm, de préférence inférieure à L = 18 mm.

4. Procédé selon l'une quelconque des revendications 1 à 3, **caractérisé en ce que** le canal (9) est orienté, vu dans la section transversale de profilé, de manière oblique par rapport à la partie faisant saillie en forme d'entretoise (4).

5. Procédé selon la revendication 4, **caractérisé en ce que** le canal (9) et la partie faisant saillie en forme d'entretoise (4) forment entre eux un angle de 5° - 30°, de préférence de 8° - 15°.
